# EUROPÄISCHE PATENTSCHRIFT

(11) **EP 3 278 511 B1**
(45) Veröffentlichungstag und Bekanntmachung des Hinweises auf die Patenterteilung: **17.02.2021**
(21) Anmeldenummer: 16710675.6
(22) Anmeldetag: 12.03.2016
(51) Int. Cl.: H04L 12/58

(54) **SYSTEM UND VERFAHREN ZUR BEARBEITUNG ELEKTRONISCHER NACHRICHTEN**
SYSTEM AND METHOD FOR PROCESSING ELECTRONIC MESSAGES
SYSTÈME ET PROCÉDÉ DE TRAITEMENT DE MESSAGES ÉLECTRONIQUES

(30) Priorität: 30.03.2015 DE 102015205664
(43) Veröffentlichungstag der Anmeldung: 07.02.2018
(73) Patentinhaber: Rückert, Tobias, 73650 Winterbach (DE)
(72) Erfinder: Rückert, Tobias, 73650 Winterbach (DE)
(74) Vertreter: Heidinger, Andreas
(86) Internationale Anmeldenummer: PCT/EP2016/025023
(87) Internationale Veröffentlichungsnummer: WO 2016/155890

(56) Entgegenhaltungen:
- US-A1- 2014 194 064
- Samsug: "samsung galaxy gear - user manual", , 1. Januar 2013 (2013-01-01), XP055215389, Gefunden im Internet: URL:http://www.brandsmartusa.com/pdfs/manu als/20172596.pdf [gefunden am 2015-09-22]

## Beschreibung

Die Erfindung betrifft ein System zur Bearbeitung elektronischer Nachrichten mit den Merkmalen des Oberbegriffs des Anspruchs 1 und ein Verfahren zur Bearbeitung elektronischer Nachrichten mit den Merkmalen des Oberbegriffs des Anspruchs 7.

Die DE 10 2009 022 764 B4 beschreibt ein System und Verfahren zur Bearbeitung elektronischer Nachrichten. Das System ermöglicht die Bearbeitung verschiedener Arten von elektronischen Nachrichten, wie beispielsweise E-Mail und SMS-Nachrichten. Es verfügt dazu über ein Modul, das mit verschiedenen globalen Servern in Kommunikationsverbindung steht und so verschiedene Arten von elektronischen Nachrichten empfangen und senden kann. Für die Kommunikation mit den globalen Servern sind üblicherweise Zugangsdaten in Form von Nutzerkennungen und Passwörter notwendig, die in dem genannten Modul zur Verfügung stehen müssen. Da das System dafür vorgesehen ist, die Bearbeitung elektronischer Nachrichten nicht nur für einen, sondern für mehrere User zur Verfügung zu stellen, müssen die Nutzerkennungen und Passwörter verschiedener User dem genannten Modul zur Verfügung stehen.

In Samsung: "samsung galaxy gear - user manual", XP055215389 und der US 2014/194064 A1 werden Systeme zur Bearbeitung elektronischer Nachrichten beschrieben. Die Systeme verfügen über ein Endgerät in Form einer so genannten Smart Watch und ein Kommunikationsgerät in Form eines Mobiltelefons, welche beiden einem User zugeordnet sind. Das Mobiltelefon kann über einen globalen Server elektronische Nachrichten senden und empfangen. Außerdem kann es elektronische Nachrichten über die Smart Watch dem User zur Verfügung stellen. Dazu ist die Smart Watch direkt mit dem Mobiltelefon über eine Kommunikationsverbindung verbunden.

Demgegenüber ist es insbesondere die Aufgabe der Erfindung, ein System und ein Verfahren zur Bearbeitung elektronischer Nachrichten vorzuschlagen, welche eine besonders sichere und damit vor unerwünschten Zugriffen geschützte elektronische Kommunikation ermöglicht. Erfindungsgemäß wird die Aufgabe durch ein System mit den Merkmalen des Anspruchs 1 und ein Verfahren mit den Merkmalen des Anspruchs 7 gelöst.

Erfindungsgemäß weist das System zur Bearbeitung elektronischer Nachrichten ein erstes Kommunikationsmodul und wenigstens ein Schnittstellenmodul auf, welche auf einem ersten Kommunikationsgerät angeordnet sind. Das erste Kommunikationsgerät ist dabei einem ersten User zugeordnet. Das erste Kommunikationsmodul kann über das Schnittstellenmodul und einem diesem zugeordneten globalen Server elektronische Nachrichten des ersten Users senden und empfangen. Das System verfügt außerdem über ein erstes Endgerätemodul, welches auf einem vom ersten Kommunikationsgerät getrennten und dem ersten User zugeordneten ersten Endgerät angeordnet und dazu vorgesehen ist, für den ersten User bestimmte elektronische Nachrichten dem ersten User zur Verfügung zu stellen, also beispielsweise anzuzeigen, und vom ersten User zu versendende elektronische Nachrichten entgegen zu nehmen.

Das erste Kommunikationsmodul des ersten Kommunikationsgeräts und das erste Endgerätemodul des ersten Endgeräts stehen in Kommunikationsverbindung. Das erste Kommunikationsmodul des ersten Kommunikationsgeräts ist dafür vorgesehen, empfangene elektronische Nachrichten dem ersten Endgerätemodul zu übermitteln und das erste Endgerätemodul ist dafür vorgesehen, zu versendende elektronische Nachrichten an das erste Kommunikationsmodul zu übermitteln.

Das System weist zusätzlich ein Austauschmodul auf, welches auf einem vom ersten Kommunikationsgerät und dem ersten Endgerät getrennten Server angeordnet ist, mit dem ersten Kommunikationsmodul des ersten Kommunikationsgeräts und dem ersten Endgerätemodul des ersten Endgeräts in Kommunikationsverbindung steht und dafür vorgesehen ist, über das erste Kommunikationsmodul des ersten Kommunikationsgeräts empfangene elektronische Nachrichten dem ersten Endgerätemodul und zu versendende elektronische Nachrichten vom ersten Endgerätemodul zum Kommunikationsmodul zu übermitteln. Das Austauschmodul kann auch verteilt auf mehreren Servern angeordnet sein.

Damit erfolgt die Kommunikation mit den globalen Servern nur über das erste Kommunikationsmodul und das Schnittstellenmodul und somit nur auf dem ersten Kommunikationsgerät. Wenn man das Kommunikationsgerät, den Server mit dem Austauschmodul und die Endgeräte als system-interne Geräte ansieht, so erfolgt im Normalbetrieb die Kommunikation nach extern nur über das Kommunikationsgerät. Die für die Kommunikation mit den globalen Servern notwendige Nutzerkennungen und Passwörter werden also nur auf dem Kommunikationsgerät benötigt, das dem ersten User zugeordnet ist und nur von ihm oder einer sehr begrenzten Anzahl anderer User benutzt wird. Das Kommunikationsgerät ist zudem von extern eindeutig identifizierbar. Das Austauschmodul, das insbesondere vielen Usern zur Verfügung steht, erhält die elektronischen Nachrichten vom Kommunikationsmodul bereits in einem standardisierten Protokoll und benötigt damit keinen Zugriff auf Nutzerkennungen und Passwörter der einzelnen User. Die User müssen also dem Kommunikationsmodul die Nutzerkennungen und Passwörter gar nicht übermitteln, sondern nur auf dem Kommunikationsgerät einrichten, womit ein Abfangen oder anderweitiges Entwenden der Nutzerkennungen und Passwörter aus dem Austauschmodul unmöglich ist.

Das erfindungsgemäße System ermöglicht außerdem vorteilhafterweise die Kommunikation über Kommunikationskanäle, auf die nur über Schnittstellenmodule auf Endgeräten wie beispielsweise Mobiltelefonen zugegriffen werden kann, die also über keine direkte Internet-Schnittstelle verfügen, also nicht über ein Web-Interface angesprochen werden können.

Das Kommunikationsgerät ist insbesondere stationär beispielsweise in der Wohnung des ersten Users angeordnet und kann dort mit Strom versorgt werden. Die Endgerätemodule auf den Endgeräten müssen nicht mehr laufend auf den globalen Servern anfragen, ob neue elektronische Nachrichten vorliegen, sondern bekommen diese direkt vom Kommunikationsmodul zugestellt. Dafür ist weniger Energie wie für die Kommunikation mit den globalen Servern notwendig, was lange Akkulaufzeiten bei den Endgeräten ermöglicht.

Bei den elektronischen Nachrichten kann es sich beispielsweise um E-Mails, Kalendereinträge, Besprechungseinladungen, Aufgaben, Memos, Notizen, Fax-Nachrichten, Telefonnachrichten (Anrufbeantworterfunktion), SMS-Nachrichten, Bookmarks (Lesezeichen), eingescannte Dokumente oder sonstige Dateien als Anhang einer Nachricht oder die über einen Dienst ins Internet hochgeladen werden können, sowie um Kommunikation in so genannten Instant Messaging Diensten, Chat Diensten oder sogenannten sozialen Netzwerken wie Twitter, Facebook, Xing, Linked-In usw. handeln. Eine elektronische Nachricht kann auch eine Audio- und Video-Übertragung im Rahmen einer so genannten "Over-the-Top" Kommunikation. Eine elektronische Nachricht kann auch eine Nachricht sein, die über ein Kontaktformular auf einer Web-Seite eingegeben wird. Diese kann insbesondere als eine E-Mail in das System eingehen. Sie kann auch als ein Bild ausgeführt sein, das auf eine Online-Plattform hochgeladen werden soll.

Das erfindungsgemäße System ermöglicht damit eine so genannte "Unified Communication", d.h. es können alle Arten von elektronischen Nachrichten mit einem einzigen System bearbeitet werden und alle Arten von elektronischen Nachrichten können vom User mittels des Endgerätemoduls und damit mit nur einem Modul insbesondere in Form eines Software-Programms oder einer App bearbeitet werden. Damit wird die Kommunikation des Users deutlich vereinfacht, da er nicht für jede Art von Nachrichten ein anderes System verwenden muss.

Der globale Server kann beispielsweise ein Server eines Dienstleisters sein, der kostenlos oder kostenpflichtig Accounts für elektronische Nachrichten anbietet. In diesem Fall findet die Kommunikation zwischen dem Schnittstellenmodul und dem globalen Server über das Internet statt. Dazu kann beispielsweise das bekannte Internet Message Access Protocol (IMAP) oder ein jedes andere geeignete Protokoll verwendet werden. Es ist aber auch möglich, dass der globale Server in ein internes Netzwerk eingebunden ist, wie es insbesondere bei großen Firmen praktiziert wird. In diesem Fall läuft die Kommunikation zwischen dem Schnittstellenmodul und dem globalen Server über eine LAN-Verbindung, wobei dennoch das IMAP Protokoll oder ein jedes andere geeignete Protokoll benutzt werden kann. Unter dem Begriff globaler Server soll damit verstanden werden, dass auf diesem Server elektronische Nachrichten von außerhalb des erfindungsgemäßen Systems eingehen.

Das Kommunikationsgerät ist grundsätzlich vergleichbar wie ein mobiles Endgerät aufgebaut, wie beispielsweise ein Mobiltelefon oder ein Tablet-Computer. Es verfügt also insbesondere über einen Prozessor, Speicher, Schnittstellen nach außen, wie beispielsweise einen USB-Anschluss, einen LAN- und/oder WLAN-Adapter und die Möglichkeit zur Aufnahme einer oder mehrerer SIM-Karten für den Anschluss an ein Mobilfunknetz. Darüber hinaus sind weitere Elemente oder Schnittstellen denkbar. Es benötigt aber insbesondere keine direkten Aus- oder Eingabemöglichkeiten, also insbesondere keinen Bildschirm oder keine Tastatur bzw. Touchscreen. Als Betriebssystem kann insbesondere Android eingesetzt werden, es sind aber auch andere Betriebssysteme denkbar. Das Kommunikationsmodul und die Schnittstellenmodule sind dann als Software-Programme oder so genannte Apps ausgeführt, wobei das Kommunikationsmodul und die Schnittstellenmodule als eine einzige oder als mehrere Apps ausgeführt sein können. Die Schnittstellenmodule können auch als Apps ausgeführt sein, die in der selben Form auf mobilen Endgeräten installiert werden können und mittels welchen User elektronische Nachrichten direkt bearbeiten können.

Beim Einsatz von mehreren SIM-Karten im Kommunikationsgerät ist der User, dem das Kommunikationsgerät zugeordnet ist, vorteilhafterweise unter mehreren Mobilfunkanschlüssen gleichzeitig erreichbar sowohl für text- als auch sprachbasierte Kommunikation, welche über Voice-over-IP (VolP) weitergeleitet werden kann.

Die Kommunikation zwischen dem Kommunikationsmodul, dem Austauschmodul und dem Endgerätemodul erfolgt in einem standardisierten Protokoll, das sowohl eine asynchrone Kommunikation, als auch eine synchrone Kommunikation unterstützt. Damit ist auch eine direkte Sprach-Unterhaltung verschiedener User untereinander möglich. Dieses Protokoll ermöglicht zusätzlich auch eine Kommunikation und Synchronisation verschiedener Endgeräte untereinander.

Das Austauschmodul kann so ausgeführt sein, dass es bei einem Ausfall des ersten Kommunikationsgeräts auch direkt mit den globalen Servern kommunizieren kann. Der erste User muss dazu die notwendigen Zugangsdaten dem Austauschmodul zur Verfügung stellen. Sobald das Kommunikationsgerät wieder verfügbar ist, kann eine Synchronisation zwischen Kommunikationsmodul und Austauschmodul stattfinden. Damit wird eine besonders hohe Verfügbarkeit des Systems gewährleistet.

Erfindungsgemäß sind das Kommunikationsmodul und das Endgerätemodul dafür vorgesehen, dass ein Teil einer elektronischen Nachricht, insbesondere einen Nachrichteninhalt nur in verschlüsselter Form zwischen dem Kommunikationsmodul, dem Austauschmodul und dem Endgerätemodul übermittelt wird. Das System weist zusätzlich ein Austauschmodul auf, so dass ebenfalls ein Teil einer elektronischen Nachricht, insbesondere einen Nachrichteninhalt nur in verschlüsselter Form zwischen dem Kommunikationsmodul, dem Austauschmodul und dem Endgerätemodul übermittelt wird. Die elektronische Nachricht verfügt insbesondere über einen so genannten Header und den Nachrichteninhalt. Der Header enthält dabei Informationen über die elektronische Nachricht, wie Empfänger und Absender und deren Übermittlung, wie Sendedatum und Sendeuhrzeit. Der Nachrichteninhalt enthält die eigentliche Nachricht beispielsweise in Form eines Textes, eines Bilds, einer Sprachnachricht oder einer Kombination davon. Für die korrekte Übermittlung der elektronischen Nachricht zwischen Kommunikationsmodul, dem Austauschmodul und dem Endgerätemodul ist zumindest der Nachrichteninhalt absolut irrelevant. Es ist also nicht notwendig, dass das Austauschmodul auf diesen Teil der elektronischen Nachricht zugreifen kann. Durch die Übermittlung eines Teils der elektronischen Nachricht und insbesondere des Nachrichteninhalts in verschlüsselter Form wird ein unerwünschter Zugriff auf diese Inhalte unmöglich gemacht oder zumindest deutlich erschwert.

Bei der genannten Verschlüsselung werden insbesondere ein öffentlicher Schlüssel und ein privater Schlüssel verwendet. Das Austauschmodul hat dann nur Zugriff auf den öffentlichen Schlüssel und damit nicht auf den privaten Schlüssel. Damit ist es vorteilhaft möglich, dass das Austauschmodul zwar die elektronische Nachricht oder zumindest Teile davon verschlüsseln kann, aber keine Entschlüsselung verschlüsselter Inhalte möglich ist. Ein Zugriff auf den privaten Schlüssel ist in diesem Fall nur für das Endgerätemodul und/oder das Kommunikationsmodul möglich. Nur in diesen Modulen ist eine Entschlüsselung einer verschlüsselten Nachricht notwendig. Auf diese Module hat aber wiederum nur der entsprechende User Zugriff, so dass der Zugriff auf den privaten Schlüssel nur für den entsprechenden User möglich ist. Dies ermöglicht einen besonders sicheren Betrieb des Systems und eine sichere Kommunikation mit elektronischen Nachrichten.

Das erfindungsgemäße System ist insbesondere so ausgeführt, dass bei einem Ausfall eines Kommunikationskanals, das zugehörige Schnittstellenmodul von einem anderen Modul wie bisher angesteuert oder automatisch ein anderer Kommunikationskanal genutzt wird. Zusätzlich können weitere User, die mit dem ersten User über diesen Kommunikationskanal kommuniziert haben, über den Ausfall informiert werden.

Im Kommunikationsmodul und oder im Austauschmodul können zusätzlich Filter für ein und/oder ausgehende elektronische Nachrichten vorgesehen sein. Diese Filter sind beispielsweise so ausgeführt, dass sie eingehende Nachrichten, die bestimmte Kriterien erfüllen, wie beispielsweise von einem bestimmten Absender stammen oder bestimmte Begriffe beinhalten, nicht an den ersten User weiterleiten. Die Filter für ausgehende Nachrichten sind analog aufgebaut. Diese Filter können beispielsweise von einem Administrator eingerichtet werden. Der Administrator kann auch über nicht weiter geleitete Nachrichten informiert werden.

Das erfindungsgemäße System ist dafür vorgesehen, dass es von mehr als einem User genutzt wird. Das Austauschmodul steht dann mit Kommunikationsmodulen auf einer Vielzahl von Kommunikationsgeräten in Kommunikationsverbindung. Außerdem steht es dann nicht nur mit Endgerätemodulen mehrerer Endgeräte des ersten Users, sondern mit Endgerätemodulen mehrerer Endgeräte von einer Vielzahl von Usern in Signalverbindung. Das erfindungsgemäße System gewährleistet dabei, dass jeder einzelne User sicher und vertraulich über elektronische Nachrichten kommunizieren kann, ohne dass die anderen User unerlaubten Zugriff auf seine elektronischen Nachrichten haben.

In Ausgestaltung der Erfindung sind Kommunikationsgeräte einem User exklusiv zugeordnet. Darunter ist zu verstehen, dass ein Kommunikationsgerät nur genau einem User zugeordnet sein kann. Ein User ist dabei nicht mit einer Person gleichzusetzen. Eine Person kann mehrere User besitzen oder verwalten, beispielsweise einen User für geschäftliche und einen User für private Zwecke. Ein User kann alle an ihn adressierten elektronischen Nachrichten empfangen und elektronische Nachrichten unter seinem Namen oder Kennung versenden. Damit kann ein User von den globalen Servern und damit von außerhalb des erfindungsgemäßen Systems über das Kommunikationsgerät beispielsweise über ein im Kommunikationsgerät angeordnete SIM-Karte eines Mobilfunkanbieters oder eine Seriennummer des Kommunikationsgeräts eindeutig identifiziert werden. Es ist außerdem möglich, dass im Kommunikationsgerät ein Identifikationschip eingebaut ist, über den der User eindeutig identifizierbar ist. Der Identifikationschip kann auch bei der Ver- und Entschlüsselung von Nachrichten verwendet werden. Es können auch mehrere Kommunikationsgeräte einem einzigen User zugeordnet sein.

Es ist aber auch möglich, dass ein Kommunikationsgerät mehr als einem User, beispielsweise einer Familie oder einem Unternehmen zugeordnet ist. Das Kommunikationsgerät hat dann Zugriff auf die Zugangsdaten der verschiedenen User. Es können dann auch die SIM-Karten und Identifikationschips der verschiedenen User im Kommunikationsgerät angeordnet sein.

In Ausgestaltung der Erfindung sind das Kommunikationsmodul, das Endgerätemodul dafür vorgesehen, dass zwischen ihnen zusätzlich Statusinformationen zu den elektronischen Nachrichten übermittelt werden. Das System weist zusätzlich ein Austauschmodul auf,so dass über das Austauschmodul ebenfalls Statusinformationen zu den elektronischen Nachrichten übermittelt werden. Unter Statusinformationen werden in diesem Zusammenhang Informationen verstanden, die die elektronische Nachricht genauer spezifizieren. Dies ist zum Beispiel die Information, über welchen Kommunikationskanal und damit über welches Schnittstellenmodul die Nachricht empfangen wurde oder eine vom User erstellte Nachricht versendet werden soll. Darunter sind aber auch Informationen, wie Sender, Empfänger, gelesen/ ungelesen, Zustell- oder Lesebestätigungen oder auch Fehlermeldungen beim Versenden von elektronischen Nachrichten zu verstehen. Fehlermeldungen können beispielsweise entstehen, wenn ein User eine elektronische Nachricht über einen Kommunikationskanal versenden will, der diese Nachricht nicht unterstützt, also beispielsweise ein Bild als SMS-Nachricht versandt werden soll. Diese Statusinformationen werden auch als so genannte Meta-Daten bezeichnet. Im Austauschmodul werden insbesondere nur die Statusinformationen abgelegt, aber nicht der eigentliche Nachrichteninhalt. Die genannten Daten werden insbesondere in verschlüsselter Form im Austauschmodul abgelegt.

Das erfindungsgemäße System ermöglicht auch auf vorteilhafte Weise eine Volltextsuche in verschlüsselten Nachrichten. Der User kann die Suche im Endgerätemodul formulieren und verschlüsselt entweder direkt oder über das Austauschmodul an das Kommunikationsmodul senden. Das Kommunikationsmodul hat Zugriff auf den privaten Schlüssel des Users und kann deshalb in verschlüsselt abgelegten elektronischen Nachrichten eine Volltextsuche ausführen. Das Ergebnis der Suche wird dann wiederum verschlüsselt direkt oder über das Austauschmodul an das Endgerätemodul übermittelt und von ihm entschlüsselt, so dass der User es sehen kann. Die vollständige Übermittlung der für die Suche notwendigen Daten und des Ergebnisses erfolgt dabei nur verschlüsselt und damit sehr sicher.

In Ausgestaltung der Erfindung verfügt das System über ein erstes Konfigurationsmodul welches auf dem ersten Kommunikationsgerät angeordnet ist und mittels welchem der erste User Einstellungen am ersten Kommunikationsgerät vornehmen kann. Auf das Konfigurationsmodul kann beispielsweise über das Austauschmodul oder aber auch direkt über das Internet zugegriffen werden. Über das Schnittstellenmodul können beispielsweise Schnittstellenmodule installiert und konfiguriert werden. Es können beispielsweise die notwendigen Nutzerkennungen und Passwörter eingerichtet werden. Zusätzlich kann auch das Verhalten des Kommunikationsmoduls eingestellt werden. Es ist auch möglich, dass der erste User das Verhalten des ersten Kommunikationsgeräts konfigurieren kann, also beispielsweise ob es sich über Nacht automatisch abschalten soll. Das Konfigurationsmodul macht einen Bildschirm und eine Tastatur am ersten Kommunikationsgerät überflüssig und ermöglicht damit eine kostengünstige Realisierung des Kommunikationsgeräts.

In Ausgestaltung der Erfindung kann das erste Kommunikationsmodul Daten mit einem mit dem ersten Kommunikationsgerät verbundenen externen Speichermedium austauschen. Auf dem externen Speichermedium beispielsweise in Form einer externen Festplatte oder einem USB-Stick können beispielsweise Nutzerkennungen und Passwörter abgelegt sein. Das Speichermedium kann auch anderweitig zur Identifikation des Users dienen. Auf dem Speichermedium kann aber auch eine Sicherung, also ein so genanntes Backup der elektronischen Nachrichten abgelegt werden. Die elektronischen Nachrichten werden dann insbesondere in dem genannten standardisierten Format abgelegt, in dem auch der Austausch zwischen dem Kommunikationsmodul, dem Austauschmodul und dem Endgerätemodul erfolgt. Damit können insbesondere die Nachrichteninhalte verschlüsselt gesichert werden. Das Backup kann ebenfalls über das Konfigurationsmodul gestartet und/oder konfiguriert werden.

In Ausgestaltung der Erfindung weist das erfindungsgemäße System ein erstes Aktualisierungsmodul auf, welches auf dem ersten Kommunikationsgerät angeordnet ist. Mittels des Aktualisierungsmoduls kann ein Schnittstellenmodul so angesteuert werden, dass es prüft, ob auf dem ihm zugeordneten globalen Server neue elektronische Nachrichten vorliegen. Das Aktualisierungsmodul ist insbesondere dafür vorgesehen, dass es in regelmäßigen Abständen, beispielsweise alle fünf Minuten oder jede Minute eine Aktualisierung veranlasst. Die Frequenz der Aktualisierung kann insbesondere vom User über das Konfigurationsmodul eingestellt werden. Zur Aktualisierung baut das Schnittstellenmodul insbesondere eine Verbindung zu dem ihm zugeordneten globalen Server auf und fragt ab, ob neue Nachrichten vorliegen. Je nach Ausgestaltung des Schnittstellenmoduls erfolgt die Ansteuerung durch das Aktualisierungsmodul auf unterschiedliche Weise. Manche Schnittstellenmodule können durch einen Befehl zur Aktualisierung aufgefordert werden. Bei anderen Schnittstellenmodulen existiert diese Möglichkeit nicht. In diesen Fällen kann das Schnittstellenmodul beispielsweise so angesteuert werden, dass es sich kurz bei dem ihm zugeordneten globalen Server abmeldet und sofort wieder anmeldet. Bei der Anmeldung wird dann automatisch eine Prüfung auf neue elektronische Nachrichten durchgeführt.

Die oben genannte Aufgabe wird auch von einem Verfahren zur Bearbeitung elektronischer Nachrichten gelöst, bei welchem ein erstes Kommunikationsmodul über ein Schnittstellenmodul und einem diesem zugeordneten globalen Server elektronische Nachrichten eines ersten Users sendet und empfängt, wobei das erste Kommunikationsmodul und das Schnittstellenmodul auf einem ersten Kommunikationsgerät angeordnet sind, das einem ersten User zugeordnet ist. Außerdem werden für den ersten User bestimmte elektronische Nachrichten dem ersten User von einem ersten Endgerätemodul zur Verfügung gestellt und vom ersten User zu versendende elektronische Nachrichten entgegen genommen, wobei das erste Endgerätemodul auf einem vom ersten Kommunikationsgerät getrennten und dem ersten User zugeordneten ersten Endgerät angeordnet ist. Ein Austauschmodul, welches auf einem vom ersten Kommunikationsgerät und dem ersten Endgerät getrennten Server angeordnet ist und mit dem ersten Kommunikationsmodul des ersten Kommunikationsgeräts und dem ersten Endgerätemodul des ersten Endgeräts in Kommunikationsverbindung steht, übermittelt über das erste Kommunikationsmodul des ersten Kommunikationsgeräts empfangene elektronische Nachrichten dem ersten Endgerätemodul und zu versendende elektronische Nachrichten vom ersten Endgerätemodul zum Kommunikationsmodul.

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigen
- Fig. 1: ein nicht von den Ansprüchen umfasstes System zur Bearbeitung elektronischer Nachrichten mit Verbindungen zu globalen Servern und
- Fig. 2: ein erfindungsgemäßes System zur Bearbeitung elektronischer Nachrichten mit Verbindungen zu globalen Servern.

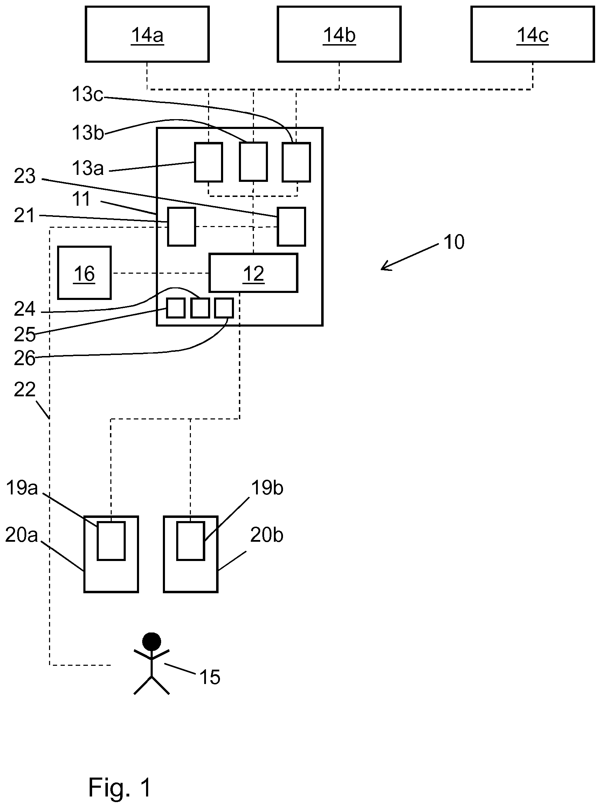

Gemäß Figur 1 weist ein nicht von den Ansprüchen umfasstes System zu Bearbeitung elektronischer Nachrichten 10 ein erstes Kommunikationsgerät 11 auf, welches grundsätzlich vergleichbar wie ein mobiles Endgerät, wie beispielsweise ein Mobiltelefon oder ein Tablet-Computer aufgebaut ist. Es weist allerdings keinen Bildschirm und keine Tastatur oder Touchscreen auf. Das erste Kommunikationsgerät 11 wird mit einem Betriebssystem, insbesondere Android betrieben. Auf dem ersten Kommunikationsgerät 11 ist zum einen ein erstes Kommunikationsmodul 12 als eine so genannte App installiert, das mit insgesamt drei Schnittstellenmodulen 13a, 13b und 13c in Kommunikationsverbindung steht. Die drei Schnittstellenmodule 13a, 13b und 13c sind ebenfalls als App ausgeführt und stehen über das Internet oder ein Mobilfunknetz mit jeweils einem ihm zugeordneten globalen Server 14a, 14b, 14c in Kommunikationsverbindung. Über jedes der drei Schnittstellenmodule 13a, 13b und 13c kann je eine unterschiedliche Art einer elektronischen Nachricht, beispielsweise E-Mail, SMS, Instant Messaging von dem zugehörigen globalen Server 14a, 14b, 14c empfangen und an ihn gesendet werden. Jede Kombination aus Schnittstellenmodul und globalem Server stellt damit einen so genannten möglichen Kommunikationskanal des Systems 10 dar.

Das erste Kommunikationsmodul 12 regelt die Kommunikation über die drei Schnittstellenmodule 13a, 13b und 13c und wandelt die in verschiedenen Formaten eingehenden elektronischen Nachrichten in ein einheitliches Format um. Es ist im Zusammenspiel mit den drei Schnittstellenmodulen 13a, 13b und 13c so konfiguriert, dass es nur elektronische Nachrichten eines ersten Users 15 empfängt und versendet. Das erste Kommunikationsgerät 11 und alle auf im installierten Apps sind damit dem ersten User 15 zugeordnet. Im ersten Kommunikationsmodul 12 oder einem mit ihm zumindest indirekt verbundenen externen Speichermedium 16 sind auch Zugangsdaten in Form von Nutzerkennungen und Passwörtern des ersten Users 15 für die verschiedenen Kommunikationskanäle abgelegt. Diese sind insbesondere in verschlüsselter Form abgelegt, so dass das erste Kommunikationsmodul 12 Zugriff auf einen für die Entschlüsselung notwendigen privaten Schlüssel des ersten Users 15 hat. Im ersten Kommunikationsgerät 11 sind außerdem zwei SIM-Karten 24, 25 zweier Mobilfunkanbieter und ein Identifikationschip 26 angeordnet. Mittels des Identifikationschips 26 kann das erste Kommunikationsgerät 11 eindeutig dem ersten User 15 zugeordnet werden. Die beiden SIM-Karten und der Identifikationschip sind nicht zwingend notwendig, sondern nur optional.

Das erste Kommunikationsmodul 12 steht über das Internet oder ein Mobilfunknetz mit ersten Endgerätemodulen 19a und 19b in Kommunikationsverbindung. Die dafür notwendigen Informationen sind im ersten Kommunikationsmodul 12 abgelegt, Das erste Endgerätemodul 19a ist auf einem ersten Endgerät 20b beispielsweise einem Mobiltelefon und das erste Endgerätemodul 19b auf einem ersten Endgerät 20b beispielsweise einem Tablet-Computer installiert. Die Endgerätemodule 19a, 19b sind also auch als so genannte Apps ausgeführt. Die beiden Endgeräte 20a, 20b sind dem ersten User 15 zugeordnet und sind getrennt vom ersten Kommunikationsgerät 11 ausgeführt. Die Zuordnung zum ersten User erfolgt durch eine entsprechende Konfiguration der Endgerätemodule 19a, 19b.

Das erste Kommunikationsmodul 12 übermittelt empfangene elektronische Nachrichten in verschlüsselter Form an die ersten Endgerätemodule 19a, 19b. Neben dem eigentlichen Nachrichteninhalt in Form von Text oder Bildern werden zusätzliche Informationen, wie beispielsweise Empfänger, Absender, .... also der so genannte Header und weitere Statusinformationen, wie beispielsweise wichtig, dringend übermittelt. Diese zusätzlichen Informationen werden als Metadaten bezeichnet. Die elektronischen Nachrichten werden von den ersten Endgerätemodulen 19a, 19b entschlüsselt und dem ersten User15 zur Bearbeitung zur Verfügung gestellt.

Der erste User 15 kann mittels eines der Endgerätemodule 19a, 19b auch eine neue elektronische Nachricht verfassen oder auf eine eingehende Nachricht antworten. Die Endgerätemodule 19a, 19b nehmen damit auch Nachrichten vom ersten User 15 zum Versenden entgegen. Der erste User 15 kann dabei auch Statusinformationen setzen und insbesondere auswählen, über welchen Kommunikationskanal die Nachricht versendet werden soll. Sofern gewünscht, kann er auch Teile der elektronischen Nachricht, wie beispielsweise den Nachrichteninhalt, aber auch weitere Teile verschlüsseln. Zum Versenden der elektronischen Nachricht wird diese von dem entsprechenden Endgerätemodul 19a oder 19b an das erste Kommunikationsmodul 12 übermittelt. Falls eine Entschlüsselung der gesamten elektronischen Nachricht oder eines Teils davon gewünscht oder notwendig ist, kann diese vom ersten Kommunikationsmodul 12 durchgeführt werden. Anschließend leitet das erste Kommunikationsmodul 12 die elektronische Nachricht dem Schnittstellenmodul 13a, 13b oder 13c weiter, das dem vom User 15 gewünschten Kommunikationskanal zugeordnet ist. Dieses übermittelt sie dann an den zugehörigen globalen Server 14a, 14b oder 14c. Der erste User 15 kann auch festlegen, dass eine elektronische Nachricht gleichzeitig über mehr als einen Kommunikationskanal versendet wird. In diesem Fall wird die elektronische Nachricht gleichzeitig an mehrere Schnittstellenmodule 13a, 13b, 13c übermittelt.

Auf dem ersten Kommunikationsgerät 11 ist zusätzlich ein erstes Konfigurationsmodul 21 in Form einer App installiert. Der erste User 15 kann auf das erste Konfigurationsmodul 21 entweder über ein Endgerätemodul 19a, 19bund das erste Kommunikationsmodul 12 oder über eine direkte Internetverbindung 22 beispielsweise über einen nicht dargestellten Internetbrowser zugreifen. Über das erste Konfigurationsmodul 21 können die für die Schnittstellenmodule 13a, 13b, 13c notwendigen Zugangsdaten eingerichtet werden. Außerdem können weitere Apps installiert werden, das Verhalten des ersten Kommunikationsmoduls 12 und des Kommunikationsgeräts 11 konfiguriert werden. Es ist außerdem möglich, dass über das erste Konfigurationsmodul 21 eine Speicherung, also ein so genanntes Backup von elektronischen Nachrichten auf dem externen Speichermedium 16 eingerichtet und konfiguriert wird.

Auf dem ersten Kommunikationsgerät 11 ist zusätzlich ein erstes Aktualisierungsmodul 23 in Form einer App installiert. Das erste Aktualisierungsmodul 23 kann auf die Schnittstellenmodule 13a, 13b und 13c zugreifen und diese ansteuern. Es steuert die Schnittstellenmodule 13a, 13b und 13c so an, dass diese als Folge von der Ansteuerung prüfen, ob neue elektronische Nachrichten für den ersten User auf den globalen Servern vorliegen. Je nach Ausgestaltung des Schnittstellenmoduls 13a, 13b, 13c erfolgt die Ansteuerung durch das erste Aktualisierungsmodul 23 auf unterschiedliche Weise. Manche Schnittstellenmodule können durch einen Befehl zur Aktualisierung aufgefordert werden. Bei anderen Schnittstellenmodulen existiert diese Möglichkeit nicht. In diesen Fällen wird das entsprechende Schnittstellenmodul so angesteuert, dass es sich kurz bei dem ihm zugeordneten globalen Server abmeldet und sofort wieder anmeldet. Bei der Anmeldung wird dann automatisch eine Prüfung auf neue elektronische Nachrichten durchgeführt. Das erste Aktualisierungsmodul 23 wird auch über das erste Konfigurationsmodul 21 konfiguriert. Es kann beispielsweise eingestellt werden, welches Schnittstellenmodul zu welchen Zeitpunkten entsprechend angesteuert werden soll.

Auf analoge Weise können auch weitere User elektronische Nachrichten bearbeiten.

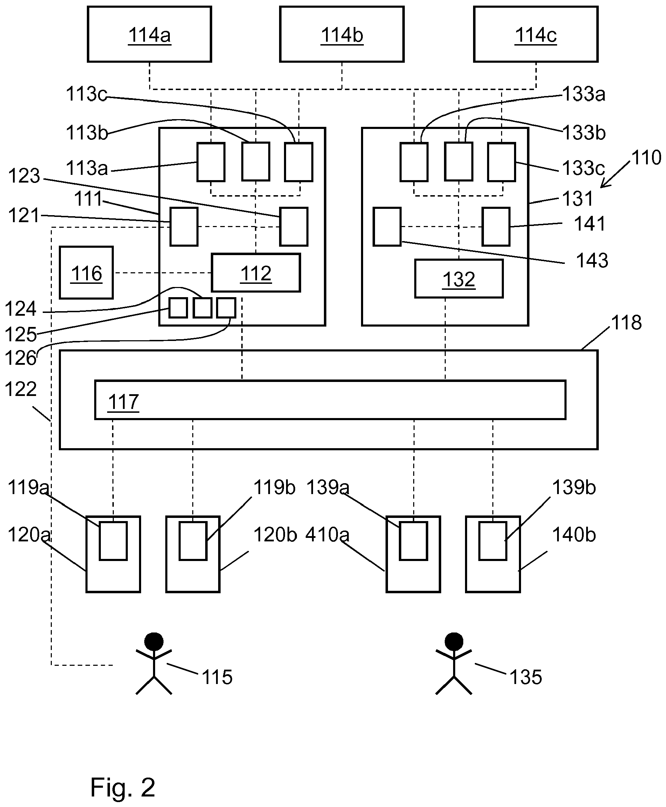

In Fig. 2 ist ein erfindungsgemäßes System 110 zur Bearbeitung elektronischer Nachrichten mit Verbindungen zu globalen Servern dargestellt. Das System 110 aus Fig. 2 ist sehr ähnlich zum System 10 aus Fig. 1 aufgebaut, weshalb nur auf die Unterschiede eingegangen wird. Gleich oder ähnlich aufgebaute oder funktionierende Elemente sind in der Fig. 2 mit einem um 100 größeren Bezugszeichen wie in Fig. 1 gekennzeichnet.

Beim System 110 steht das erste Kommunikationsmodul 112 mit einem Austauschmodul 117 über das Internet in Kommunikationsverbindung. Das Austauschmodul 117 ist auf einem vom ersten Kommunikationsgerät 111 getrennten Server 118 installiert. Es kann auch verteilt auf mehreren Servern installiert sein Das erste Kommunikationsmodul 112 übermittelt empfangene elektronische Nachrichten an das Austauschmodul 117. Neben dem eigentlichen Nachrichteninhalt in Form von Text oder Bildern werden zusätzliche Informationen, wie beispielsweise Empfänger, Absender, .... also der so genannte Header und weitere Statusinformationen, wie beispielsweise wichtig, dringend übermittelt. Diese zusätzlichen Informationen werden als Metadaten bezeichnet. Dabei werden insbesondere nur ein Teil oder die gesamten Metadaten in einer für das Austauschmodul 117 auswertbaren Form übermittelt. Der Nachrichteninhalt selbst wird in einer verschlüsselten Form übermittelt. Es kann auch zumindest ein Teil oder die gesamten Metadaten können ebenfalls in verschlüsselter Form übertragen werden. Der erste User 115 kann einstellen, welche Metadaten verschlüsselt übertragen werden sollen. Das Austauschmodul 117 hat keinen Zugriff auf den für die Entschlüsselung notwendigen privaten Schlüssel des ersten Users 115 und damit auch keinen Zugriff auf den Nachrichteninhalt. Es kann Zugriff auf den für die Verschlüsselung notwendigen öffentlichen Schlüssel haben und somit beispielsweise eine Verschlüsselung von einem Teil der Metadaten vornehmen.

Das Austauschmodul 117 kann insbesondere über den Header eine elektronische Nachricht dem ersten User 115 zuordnen. Die Identität des ersten Users 15 kann dabei dadurch "versteckt" werden, dass ihm nur eine eindeutige Identifikationsnummer zugeordnet ist. Eine dem ersten User 115 zugeordnete elektronische Nachricht wird vom Austauschmodul 117 an die dem ersten User 115 zugeordneten Endgerätemodule 119a, 119b übermittelt. Die Endgerätemodule 119a, 119b haben Zugriff auf den für die Entschlüsselung der verschlüsselten Daten notwendigen privaten Schlüssel. Die elektronischen Nachrichten können damit von den Endgerätemodulen 119a, 119b entschlüsselt werden und dem ersten User zur Verfügung gestellt werden, so dass er sie bearbeiten, d.h. insbesondere lesen, anhören oder ansehen kann. Der erste User 115 kann auch festlegen, dass nicht alle elektronischen Nachrichten an alle ihm zugeordneten Endgeräte übermittelt werden. Beispielsweise kann er festlegen, dass bestimmte Arten von elektronischen Nachrichten nur auf bestimmte Endgeräte übermittelt werden oder dass in bestimmten Zeiträumen, beispielsweise nachts keine elektronischen Nachrichten an ein bestimmtes Endgerät übermittelt werden.

Der erste User 115 kann mittels eines der Endgerätemodule 119a, 119b auch eine neue elektronische Nachricht verfassen oder auf eine eingehende Nachricht antworten. Zum Versenden der elektronischen Nachricht wird diese von dem entsprechenden Endgerätemodul 119a oder 119b an das Austauschmodul 117 übermittelt. Dieses leitet die elektronische Nachricht an das dem ersten User 115 zugeordnete erste Kommunikationsmodul 112 weiter.

Das Austauschmodul 117 verarbeitet nicht nur elektronische Nachrichten des ersten Users 115, sondern von einer Vielzahl von Usern. Stellvertretend für viele weitere User ist in Fig. 2 ein zweiter User 135 dargestellt. Dem zweiten User 135 sind zwei Endgeräte 140a, 140b mit Endgerätemodulen 139a, 139b zugeordnet. Außerdem ist dem zweiten User 135 ein zweites Kommunikationsgerät 131 zugeordnet, welches analog dem ersten Kommunikationsgerät 111 aufgebaut ist und ein zweites Kommunikationsmodul 132, Schnittstellenmodule 133a, 133b, 133c, ein Konfigurationsmodul 141 und ein Aktualisierungsmodul 143 aufweist. Die Bearbeitung von elektronischen Nachrichten des zweiten Users 135 erfolgt in analoger Weise durch die genannten Module wie die Bearbeitung von elektronischen Nachrichten des ersten Users 115.

## Patentansprüche

1. System zur Bearbeitung elektronischer Nachrichten mit
- einem ersten Kommunikationsmodul (112) und wenigstens einem Schnittstellenmodul (113a, 113b, 113c), welche auf einem ersten Kommunikationsgerät (111), welches einem ersten User (115) zugeordnet ist, angeordnet sind, wobei das erste Kommunikationsmodul (112) über ein Schnittstellenmodul (113a, 113b, 113c) und einem diesem zugeordneten globalen Server (114a, 114b, 114c) elektronische Nachrichten des ersten Users (115) senden und empfangen kann,
- einem ersten Endgerätemodul (119a, 119b), welches auf einem vom ersten Kommunikationsgerät (111) getrennten und dem ersten User (115) zugeordneten ersten Endgerät (120a, 120b) angeordnet ist und dazu vorgesehen ist, für den ersten User (115) bestimmte elektronische Nachrichten dem ersten User (115) zur Verfügung zu stellen und vom ersten User (115) zu versendende elektronische Nachrichten entgegen zu nehmen,
wobei das erste Kommunikationsmodul (112) des ersten Kommunikationsgeräts (111) und das erste Endgerätemodul (119a, 119b) des ersten Endgeräts (120a, 120b) in Kommunikationsverbindung stehen und
das erste Kommunikationsmodul (112) des ersten Kommunikationsgeräts (111) dafür vorgesehen ist, empfangene elektronische Nachrichten dem ersten Endgerätemodul (119a, 119b) zu übermitteln und
das erste Endgerätemodul (119a, 119b) dafür vorgesehen ist, zu versendende elektronische Nachrichten an das erste Kommunikationsmodul (112) zu übermitteln, **gekennzeichnet, durch**
ein Austauschmodul (117), welches
dazu vorgesehen ist, elektronische Nachrichten von einer Vielzahl von Usern (115, 135) zu verarbeiten, wobei jedem User (115, 135) ein Kommunikationsgerät (111, 131) mit einem Schnittstellenmodul (113a, 113b, 113c; 133a, 133b, 133c) und ein Endgerät (120a, 120b; 140a, 140b) mit einem Endgerätemodul (119a, 119b; 139a, 139b) zugordnet ist, und welches
auf einem von den Kommunikationsgeräten (111, 131) und den Endgeräten (120a, 120b; 140a, 140b) getrennten Server (118) angeordnet ist,
mit den Kommunikationsmodulen (112, 132) der Kommunikationsgeräte (111, 131) und den Endgerätemodulen (119a, 119b; 139a, 139b) der Endgeräte (120a, 120b; 140a, 140b) in Kommunikationsverbindung steht und
dafür vorgesehen ist, über ein Kommunikationsmodul (112, 132) eines Kommunikationsgeräts (111, 131) empfangene elektronische Nachrichten dem zugehörigen Endgerätemodul (119a, 119b; 139a, 139b) und zu versendende elektronische Nachrichten von einem Endgerätemodul (119a, 119b; 139a, 139b) zum zugehörigen Kommunikationsmodul (112, 132) zu übermitteln, und
die Kommunikationsmodule (112, 132), die Endgerätemodule (119a, 119b; 139a, 139b) und das Austauschmodul (117) dafür vorgesehen sind, dass ein Teil einer elektronischen Nachricht, insbesondere einen Nachrichteninhalt nur in verschlüsselter Form zwischen den Kommunikationsmodulen (112, 132), dem Austauschmodul (117) und den Endgerätemodulen (119a, 119b; 139a, 139b) übermittelt wird, wobei bei einer Verschlüsselung des genannten Teils der elektronischen Nachricht ein öffentlicher Schlüssel und ein privater Schlüssel verwendet werden und das Austauschmodul (117) nur Zugriff auf den öffentlichen Schlüssel hat.

2. System nach Anspruch 1,
**dadurch gekennzeichnet, dass**
Kommunikationsgeräte (11, 111, 131) jeweils nur exklusiv einem User (115, 135) zugeordnet sind.

3. System nach Anspruch 1 oder 2,
**dadurch gekennzeichnet, dass**
das erste Kommunikationsmodul (12, 112), das erste Endgerätemodul (19a, 19b, 119a, 119b) und das Austauschmodul (117) dafür vorgesehen sind, dass zwischen ihnen zusätzlich Statusinformationen zu den elektronischen Nachrichten übermittelt werden.

4. System nach einem der Ansprüche 1 bis 3,
**gekennzeichnet durch**
ein erstes Konfigurationsmodul (21, 121), welches auf dem ersten Kommunikationsgerät (11, 111) angeordnet ist und mittels welchem der erste User (15, 115) Einstellungen am ersten Kommunikationsgerät (11, 111) vornehmen kann.

5. System nach einem der Ansprüche 1 bis 4,
**dadurch gekennzeichnet, dass**
das erste Kommunikationsmodul (12, 112) Daten mit einem mit dem ersten Kommunikationsgerät (11, 111) verbundenen externen Speichermedium (116) austauschen kann.

6. System nach einem der Ansprüche 1 bis 5,
**gekennzeichnet durch**
ein erstes Aktualisierungsmodul (23, 123), welches auf dem ersten Kommunikationsgerät (11, 111) angeordnet ist und mittels welchem ein Schnittstellenmodul (13a, 13b, 13c, 113a, 113b, 113c) so angesteuert werden kann, dass es prüft, ob auf dem ihm zugeordneten globalen Server (14a, 14b, 14c, 114a, 114b, 114c) neue elektronische Nachrichten vorliegen.

7. Verfahren zur Bearbeitung elektronischer Nachrichten, bei welchem
- ein erstes Kommunikationsmodul (12) über ein Schnittstellenmodul (13a, 13b, 13c) und einem diesem zugeordneten globalen Server (14a, 14b, 14c) elektronische Nachrichten eines ersten Users (15) sendet und empfängt, wobei das erste Kommunikationsmodul (12) und die Schnittstellenmodule (13a, 13b, 13c) auf einem ersten Kommunikationsgerät (11) angeordnet sind, welches einem ersten User (15) zugeordnet ist,
- für den ersten User (15) bestimmte elektronische Nachrichten dem ersten User (15) von einem ersten Endgerätemodul (19a, 19b) zur Verfügung gestellt und vom ersten User (15) zu versendende elektronische Nachrichten entgegen genommen werden, wobei das erste Endgerätemodul (19a, 19b) auf einem vom ersten Kommunikationsgerät (11) getrennten und dem ersten User (15) zugeordneten ersten Endgerät (20a, 20b) angeordnet ist,
**dadurch gekennzeichnet, dass**
- ein Austauschmodul (17), welches dazu vorgesehen ist, elektronische Nachrichten von einer Vielzahl von Usern (115, 135) zu verarbeiten, wobei jedem User (115, 135) ein Kommunikationsgerät (111, 131) mit einem Schnittstellenmodul (113a, 113b, 113c; 133a, 133b, 133c) und ein Endgerät (120a, 120b; 140a, 140b) mit einem Endgerätemodul (119a, 119b; 139a, 139b) zugordnet ist, und welches auf einem von den Kommunikationsgeräten (111, 131) und den Endgeräten (120a, 120b; 140a, 140b) getrennten Server (118) angeordnet ist und mit den Kommunikationsmodulen (112, 132) der Kommunikationsgeräte (111, 131) und den Endgerätemodulen (119a, 119b, 139a, 139b) der Endgeräte (120a, 120b; 140a, 140b) in Kommunikationsverbindung steht, über ein Kommunikationsmodul (112, 132) eines Kommunikationsgeräts (111, 131) empfangene elektronische Nachrichten dem zugehörigen Endgerätemodul (119a, 119b; 139a, 139b) und zu versendende elektronische Nachrichten von einem Endgerätemodul (119a, 119b; 139a, 139b) zum zugehörigen Kommunikationsmodul (112, 132) übermittelt und
- die Kommunikationsmodule (112, 132), die Endgerätemodule (119a, 119b; 139a, 139b) und das Austauschmodul (117) einen Teil einer elektronischen Nachricht, insbesondere einen Nachrichteninhalt nur in verschlüsselter Form zwischen den Kommunikationsmodulen (112, 132), dem Austauschmodul (117) und den Endgerätemodulen (119a, 119b; 139a, 139b) übermitteln, wobei bei einer Verschlüsselung des genannten Teils der elektronischen Nachricht ein öffentlicher Schlüssel und ein privater Schlüssel verwendet werden und das Austauschmodul (117) nur Zugriff auf den öffentlichen Schlüssel hat.

## Claims

1. A system for processing electronic messages with
- a first communication module (112) and at least one interface module (113a, 113b, 113c), which are arranged on a first communication device (111), which is assigned to a first user (115), whereby the first communication module (112) can send and receive electronic messages of the first user (115) via an interface module (113a, 113b, 113c) and a global server (114a, 114b, 114c) assigned to the interface module (113a, 113b, 113c),
- a first terminal device module (119a, 119b), which is arranged on a first terminal device (120a, 120b) assigned to the first user (115) that is separate from the first communication device (111) and which is intended to provide the first user (115) with specific electronic messages for the first user (115) and to receive electronic messages to be sent from the first user (115),
whereby there is a communication link between the first communication module (112) of the first communication device (111) and the first terminal device module (119a, 119b) of the first terminal device (120a, 120b) and the first communication module (112) of the first communication device (111) is provided to transmit received electronic messages to the first terminal device module (119a, 119b) and the first terminal device module (119a, 119b) is provided to send electronic messages to be sent to the first communication module (112), **characterized by** an exchange module (117), which is provided to process electronic messages from a large number of users (115, 135),
whereby each user (115, 135) is assigned a communication device (111, 131) with an interface module (113a, 113b, 113c; 133a, 133b, 133c) and a terminal device (120a, 120b; 140a, 140b) with a terminal device module (119a, 119b; 139a, 139b), and which is arranged on a server (118) separate from the communication devices (111, 131) and the end devices (120a, 120b; 140a, 140b), with which the communication modules (112, 132) of the communication devices (111, 131) and the terminal device modules (119a, 119b; 139a, 139b) of the terminal devices (120a, 120b; 140a, 140b) communicate and are provided to transmit via a communication module (112, 132) of a communication device (111, 131) the received electronic messages to be sent to the corresponding terminal device module (119a, 119b; 139a, 139b) and the electronic messages to be sent from a terminal device module (119a, 119b; 139a, 139b) to the corresponding communication module (112, 132), and the communication modules (112, 132), the terminal device modules (119a, 119b; 139a, 139b), and the exchange module (117) are provided to transmit a part of an electronic message, especially a part of the electronic message only available in encrypted form, between the communication modules (112, 132), the exchange module (117), and the terminal device modules (119a, 119b; 139a, 139b), whereby encryption of said part of the electronic message uses a public key and a private key and the exchange module (117) only has access to the public key.

2. System according to Claim 1, **characterized in that** each of the communication devices (11, 111, 131) are assigned exclusively to one user (115, 135.

3. System according to Claim 1 or 2,
**characterized in that**
the first communication module (12, 112), the first terminal device module (19a, 19b, 119a, 119b), and the exchange module (117) are provided to transmit additional status information on the electronic messages between each other.

4. System according to one of the Claims 1 to 3,
**characterized by**
a first configuration module (21, 121), which is arranged on the first communication device (11, 111) and by means of which the first user (15, 115) can adjust settings on the first communication device (11, 111).

5. System according to one of Claims 1 to 4,
**characterized in that**
the first communication module (12, 112) can exchange data with an external storage medium (116) connected to the first communication device (11, 111).

6. System according to one of Claims 1 to 5,
**characterized by**
a first update module (23, 123), which is arranged on the first communication device (11, 111) and by means of which an interface module (13a, 13b, 13c, 113a, 113b, 113c) can be controlled so that it checks if there are new electronic messages available for it on the global server (14a, 14b, 14c, 114a, 114b, 114c) assigned to it.

7. Method for processing electronic messages in which
- a first communication module (12) sends and receives electronic messages of a first users (15) via an interface module (13a, 13b, 13c) and a global server (14a, 14b, 14c) assigned to it, whereby the first communication module (12) and the interface modules (13a, 13b, 13c) are arranged on a first communication device (11), which is assigned to a first user (15),
- electronic messages intended for the first user (15) are made available to the first user (15) on a first terminal device module (19a, 19b), and electronic messages to be sent from the first user (15) are received, whereby the first terminal device module (19a, 19b) is arranged on a first terminal device (20a, 20b) assigned to the first user (15) and separate from the first communication device (11), **characterized in that**
- an exchange module (17), which is provided to process electronic messages from a variety number of users (115, 135), whereby each user (115, 135) is assigned a communication device (111, 131) with an interface module (113a, 113b, 113c; 133a, 133b, 133c) and a terminal device (120a, 120b; 140a, 140b) with a terminal device module (119a, 119b; 139a, 139b), and which is arranged on a server (118) separate from the communication devices (111, 131) and the terminal devices (120a, 120b; 140a, 140b) and which communicates with the communication modules (112, 132) of the communication devices (111, 131) and the terminal device modules (119a, 119b, 139a, 139b) of the terminal devices (120a, 120b; 140a, 140b), which transmits via a communication module (112, 132) of a communication device (111, 131) the received electronic messages to be sent to the corresponding terminal device module (119a, 119b; 139a, 139b) and the electronic messages to be sent from a terminal device module (119a, 119b; 139a, 139b) to the corresponding communication module (112, 132) and
- the communication modules (112, 132), the terminal device modules (119a, 119b; 139a, 139b), and the exchange module (117) transmit a part of an electronic message, especially a part of the electronic message only available in encrypted form, between the communication modules (112, 132), the exchange module (117), and the terminal device modules (119a, 119b; 139a, 139b), whereby encryption of said part of the electronic message uses a public key and a private key and the exchange module (117) only has access to the public key.

## Revendications

1. Système de traitement de messages électroniques avec
- un premier module de communication (112) et au moins un module d'interface (113a, 113b, 113c), lesquels sont disposés sur un premier appareil de communication (111) associé à un premier utilisateur (115), le premier module de communication (112) pouvant envoyer et recevoir des messages électroniques du premier utilisateur (115) via un module d'interface (113a, 113b, 113c) et un serveur global (114a, 114b, 114c) qui lui est associé,
- un premier module terminal (119a, 119b), lequel est disposé sur un terminal (120a, 120b) séparé du premier appareil de communication (111) et associé au premier utilisateur (115) et est prévu pour mettre certains messages électroniques à disposition du premier utilisateur (115) pour le premier utilisateur (115) et pour réceptionner les messages électroniques à envoyer par le premier utilisateur (115),
le premier module de communication (112) du premier appareil de communication (111) et le premier module terminal (119a, 119b) du premier terminal (120a, 120b) étant en communication et le premier module de communication (112) du premier appareil de communication (111) étant prévu pour envoyer au premier module terminal (119a, 119b) les messages électroniques reçus et
le premier module de communication (119a, 119b) étant prévu pour envoyer au premier module de communication (112) des messages électroniques à envoyer, marqué par
un module d'échange (117), lequel
est prévu pour traiter des messages électroniques d'une multitude d'utilisateurs (115, 135), un appareil de communication (111, 131) avec un module d'interface (113a, 113b, 113c; 133a, 133b, 133c) ainsi qu'un terminal (120a, 120b; 140a, 140b) avec un module terminal (119a, 119b; 139a, 139b) étant associés à chaque utilisateur (115, 135), et lequel est disposé sur un serveur (118) séparé des appareils de communication (111, 131) et des terminaux (120a, 120b; 140a, 140b), est en communication avec les modules de communication (112, 132) des appareils de communication (111, 131) et les modules terminaux (119a, 119b; 139a, 139b) des terminaux (120a, 120b; 140a, 140b) et
est prévu pour envoyer au module terminal (119a, 119b; 139a, 139b) associé les messages électroniques reçus et les messages électroniques à envoyer depuis un module terminal (119a, 119b; 139a, 139b) au module de communication associé (112, 132) via un module de communication (112, 132) d'un appareil de communication (111, 131), et
les modules de communication (112, 132), les modules terminaux (119a, 119b; 139a, 139b) et le module d'échange (117) sont prévus pour qu'une partie d'un message électronique, particulièrement un contenu de message, soit envoyée uniquement sous forme cryptée entre les modules de communication (112, 132), le module d'échange (117) et les modules terminaux (119a, 119b; 139a, 139b), une clé publique et une clé privée étant utilisées en cas de cryptage de la partie mentionnée du message électronique et le module d'échange (117) n'ayant accès qu'à la clé publique.

2. Système conformément à l'exigence 1
marqué par le fait que
les appareils de communication (11, 111, 131) sont exclusivement et uniquement associés à un utilisateur (115, 135).

3. Système conformément à l'exigence 1 ou 2
marqué par le fait que
le premier module de communication (12 ,112), le premier module terminal (19a, 19b, 119a, 119b) et le module d'échange (117) sont prévus pour que des informations liées au statut des messages électroniques soient transmises entre eux.

4. Système conformément à une des exigences 1 à 3
marqué par le fait que
un premier module de configuration (21, 121) est disposé sur le premier appareil de communication (11, 111) et permet au premier utilisateur (15 ,115) de procéder aux réglages sur le premier appareil de communication (11, 111).

5. Système conformément à une des exigences 1 à 4
marqué par le fait que
le premier module de communication (12, 112) peut échanger des données avec un support de sauvegarde (116) externe lié au premier appareil de communication (11, 111).

6. Système conformément à une des exigences 1 à 5
marqué par le fait que
un premier module d'actualisation (23, 123) est disposé sur le premier appareil de communication (11, 111) et permet de commander un module d'interface (13a, 13b, 13c, 113a, 113b, 113c) de manière à contrôler si de nouveaux messages électroniques sont apparus sur le serveur global lui étant associé (14a, 14b, 14c, 114a, 114b, 114c).

7. Procédure de traitement des messages électroniques au cours de laquelle
- un premier module de communication (12) envoie et reçoit des messages électroniques d'un premier utilisateur (15) via un module d'interface (13a, 13b, 13c) et un serveur global lui étant associé (14a, 14b, 14c), le premier module de communication (12) et les modules d'interface (13a, 13b, 13c) étant disposés sur un premier appareil de communication (11) lequel est associé à un premier utilisateur (15),
- certains messages électroniques pour le premier utilisateur (15) sont mis à disposition du premier utilisateur (15) par un premier module terminal (19a, 19b) et les messages électroniques à envoyer par le premier utilisateur (15) sont réceptionnés, le premier module terminal (19a, 19b) étant disposés sur un premier terminal (20a, 20b) séparé du premier appareil de communication (11) et associé au premier utilisateur (15),
marqué par le fait que
- un module d'échange (17), lequel
est prévu pour traiter des messages électroniques par une multitude d'utilisateurs (115, 135), un appareil de communication (111, 131) avec un module d'interface (113a, 113b, 113c; 133a, 133b, 133c) et un terminal (120a, 120b; 140a, 140b) avec un module terminal (119a, 119b; 139a, 139b) étant associés à chaque utilisateur (115, 135), et lequel est disposé sur un serveur séparé (118) des appareils de communication (111, 131) et des terminaux (120a, 120b; 140a, 140b) et est en communication avec les modules de communication (112, 132) des appareils de communication (111, 131) et avec les modules terminaux (119a, 119b, 139a, 139b) des terminaux (120a, 120b; 140a, 140b),
transmet, via un module de communication (112, 132) d'un appareil de communication (111, 131)) les messages électroniques reçus au module terminal associé (119a, 119b; 139a, 139b) et les messages électroniques à envoyer depuis un module terminal (119a, 119b; 139a, 139b) au module de communication lui étant associé (112, 132) et
- les modules de communication (112, 132) les modules terminaux (119a, 119b; 139a, 139b) et le module d'échange (117) transmettent une partie d'un message électronique, notamment un contenu de message, uniquement sous forme cryptée, entre les modules de communication (112, 132), le module d'échange (117) et les modules terminaux (119a, 119b; 139a, 139b), une clé publique et une clé privée étant utilisées en cas de cryptage de la partie mentionnée du message électronique et le module d'échange (117) n'ayant accès qu'à la clé publique.
